# EUROPÄISCHE PATENTSCHRIFT

(11) **EP 3 356 279 B1**
(45) Veröffentlichungstag und Bekanntmachung des Hinweises auf die Patenterteilung: **11.03.2020**
(21) Anmeldenummer: 16774482.0
(22) Anmeldetag: 28.09.2016
(51) Int. Cl.: B66C 13/16, B66D 1/58, B66B 1/34, B66B 5/02

(54) **TROMMELFÖRDERANLAGE MIT SEILÜBERWACHUNGSEINRICHTUNG**
DRUM-TYPE CONVEYING INSTALLATION WITH CABLE-MONITORING DEVICE
SYSTÈME DE TRANSPORT À TAMBOUR ÉQUIPÉ D'UN DISPOSITIF DE SURVEILLANCE DE CÂBLE

(30) Priorität: 29.09.2015 DE 102015116515
(43) Veröffentlichungstag der Anmeldung: 08.08.2018
(73) Patentinhaber: OLKO Maschinentechnik GmbH, 59399 Olfen (DE)
(72) Erfinder: KÖSTERKE, Uwe, 44799 Bochum (DE)
(74) Vertreter: Kohlmann, Kai
(86) Internationale Anmeldenummer: PCT/EP2016/073042
(87) Internationale Veröffentlichungsnummer: WO 2017/055315

(56) Entgegenhaltungen:
- EP-B1- 0 068 683
- WO-A2-2007/084553
- DE-A1-102012 111 424
- DE-U1- 29 604 729
- DE-U1- 29 715 349
- US-A- 4 462 484

## Beschreibung

Die Erfindung betrifft eine Einseil-Trommelförderanlage mit einer von einem Windenantrieb angetriebenen Seiltrommel umfassend eine Seilüberwachungseinrichtung, ein frei an einem Förderseil hängendes Fördermittel und ein zum Verbinden des Förderseils mit dem Fördermittel eingerichtetes Zwischengeschirr. Außerdem betrifft die Erfindung ein Verfahren zur Seilüberwachung einer Einseil-Trommelförderanlage.

Einseil-Trommelförderanlagen werden als Befahrungsanlagen, Hilfsfahranlagen und Notfahranlagen im Bergbau eingesetzt. Unabhängig davon, ob die Einseil-Trommelförderanlage stationär oder als mobile Anlage betrieben wird, muss sie den technischen Anforderungen an Schacht- und Schrägförderanlagen (TAS) genügen. Demnach müssen Trommelförderanlagen mit einer geeigneten Hängseilüberwachungseinrichtung ausgerüstet sein, die über den gesamten Fahrweg das Hängenbleiben des Fördermittels erkennt. Nach dem Ansprechen der Überwachungseinrichtung muss eine Wiederanfahrt der Förderanlage möglich sein.

Eine Hängseilüberwachung während des Betriebes der Trommelförderanlage ist erforderlich, da die Gefahr besteht, dass das Fördermittel während der Abwärtsfahrt im Schacht hängen bleibt. Wird dieses Hängenbleiben nicht bemerkt, wird immer mehr Förderseil von der Seiltrommel abgewickelt und es kommt zur Ausbildung des sogenannten Hängseils. Löst sich das Fördermittel, stürzt es ab und das Förderseil würde voraussichtlich abgerissen. Befinden sich Personen in dem Fördermittel (Förderkorb) kommt es zu einem schweren Unfall.

Aus der DE 297 15 349 U1 sind Hängeseilüberwachungseinrichtungen bekannt,, bei denen auf der schräg verlaufenden Strecke des Seils zwischen der Seiltrommel und der Seilscheibe am Fördergerüst eine mit einem Schalter gekoppelte Rolle aufliegt. Wenn diese Seilstrecke wegen Hängeseilbildung durchhängt, wird der Schalter betätigt und eine Störung erkannt. Der Antrieb der Seiltrommel wird abgeschaltet und eine Notbremsung eingeleitet. Eine derartige Hängeseilüberwachung reagiert erst, wenn sich das Fördermittel bereits schiefgestellt hat. Befindet sich das Fördermittel im unteren Schachtbereich, ist das Seilgewicht so groß, dass die Überwachungseinrichtung überhaupt nicht anspricht. Aus diesem Grund wird diese Hängeseilüberwachung zumeist durch eine zweite überwachungseinrichtung im Bereich des Fördermittels ergänzt.

Eine weitere Möglichkeit zur Hängeseilüberwachung besteht darin, dass an der Unterseite des Fördermittels eine Berührungsleiste angebracht ist, die ein Aufsetzen des Korbes feststellt. Die Berührungsleiste spricht jedoch nicht an, wenn das Fördermittel an den Seitenwänden hängenbleibt.

Darüber hinaus ist es bekannt, eine Hängseilüberwachung durch eine Lastmessung am Windenantrieb durchzuführen. Ein Nachteil dieser Hängeseilüberwachung besteht darin, dass zur Erfassung der angehängten Last, die abgewickelte Länge des Förderseils und deren Seilgewicht berücksichtig werden muss.

Die EP 0 068 683 B1 offenbart eine Einseil-Trommelförderanlage umfassend eine Hängeseilüberwachung bei der in einer Ausführungsform Wegsensoren zur Überwachung der Seillast so angeordnet sind, dass die Beanspruchung an einer Verbindung zwischen dem Förderseilende und dem Förderkorb gemessen wird. Die Lastsignale werden mittels Signalmitteln zu einer Auswerteeinrichtung übertragen. Wenn die Lastsignale unter einen vorbestimmten Wert abfallen, wird ein Fördermaschinen-Auslösesignal erzeugt.

Ferner offenbart die DE 10 2012 111 424 A1 eine Hebeeinrichtung für einen Container. Bei der Hebeeinrichtung handelt es sich beispielsweise um eine Containerbrücke mit einer höhenverstellbaren Aufnahmevorrichtung. An allen vier Ecken ist die Aufnahmevorrichtung jeweils über einen Lastmesshaken mit dem Container verbunden. In jeden Lastmesshaken ist in eine zentrale Bohrung ein Kraftmessdübel mit einem Kraftnesssensor eingeschraubt. Die Lastmesshaken werden auf Zug beansprucht und dehnen sich in Längsrichtung in Abhängigkeit von dem Gewicht des Containers aus. Die Längenänderung der Lastmesshaken führt zu einer entsprechenden Ausdehnung der in den Lastmesshaken befindlichen zentralen Bohrungen und dadurch zu einer Entlastung des vorgespannten und dadurch verformten Kraftmesssensors. Infolge der Entlastung ändern sich die Messsignale des Kraftmesssensors, die ausgewertet werden.

Ausgehend von diesem Stand der Technik liegt der Erfindung die Aufgabe zugrunde, eine Einseil-Trommelförderanlage der eingangs erwähnten Art zu schaffen, deren Seilüberwachungseinrichtung bei Störungsfällen unabhängig von der Position des Fördermittels im Schacht und unabhängig von der Seillast unmittelbar und zuverlässig eine Störung erkennt, wobei die Messgenauigkeit bei gleicher Sicherheit der Kraftübertragung zwischen Förderseil und dem Zwischengeschirr erhöht ist. Außerdem soll ein Verfahren zur Seilüberwachung für eine Einseil-Trommelförderanlage angegeben werden.

Diese Aufgabe wird bei einer Einseil-Trommelförderanlage der eingangs erwähnten Art dadurch gelöst, dass
- die Seilüberwachungseinrichtung einen Lastmessbolzen als Bestandteil des Zwischengeschirrs und einen Übertragungsweg zum Übertragen der von dem Lastmessbolzen aufgenommenen Messsignale zu einer Auswerteeinrichtung aufweist und
- die Auswerteinrichtung zur Auswertung der Messsignale derart eingerichtet ist, dass bei Auftreten eines Signalsprungs des Messsignals, der eine bestimmte Größe überschreitet, eine Störung erkannt wird,
- eine Seilkausche des Förderseils über den Lastmessbolzen an dem Zwischengeschirr angeschlagen ist,
- zwischen der Seilkausche und dem Zwischengeschirr zusätzlich ein Sicherheitsbolzen angeordnet ist, der einen Durchgang in dem Zwischengeschirr und in der Seilkausche durchsetzt,
- und der Durchgang in der Seilkausche und/oder der Durchgang in dem Zwischengeschirr den Sicherheitsbolzen unter Ausbildung eines Ringspaltes umgibt.

Durch die Anordnung des Lastmessbolzens im Zwischengeschirr wird die Last unabhängig von der Position des Fördermittels im Schacht und unabhängig von der Seillast mithilfe des Lastmessbolzens kontinuierlich erfasst. Die Auswerteeinrichtung zur Auswertung der Messsignale des Lastmessbolzens ist derart eingerichtet, dass bei Auftreten eines Signalsprunges des Messsignals eine Störung erkannt wird. Die Höhe des Messsignals korreliert mit der Höhe der Last. Im Regelbetrieb des Fördermittels entspricht das erfasste Messsignal der Anhängelast, d.h. der Masse des Fördermittels und der Beladung des Fördermittels. Setzt das Fördermittel auf oder bleibt es in der Abwärtsbewegung hängen, reduziert sich schlagartig die auf den Lastmessbolzen wirkende Last, was sich in einem negativen Signalsprung äußert. Bleibt das Fördermittel bei der Aufwärtsbewegung hängen, tritt ein positiver Signalsprung auf. Die Seilüberwachungseinrichtung erlaubt darüber hinaus eine kontinuierliche Überwachung der Beladung des Fördermittels, damit dieses nicht überladen wird.

Gemäß der Erfindung ist zwischen der Seilkausche und dem Zwischengeschirr zusätzlich ein Sicherheitsbolzen angeordnet, der ebenfalls einen Durchgang in dem Zwischengeschirr und in der Seilkausche durchsetzt, wobei der Durchgang in der Seilkausche und/oder der Durchgang in dem Zwischengeschirr den Sicherheitsbolzen unter Ausbildung eines Ringspaltes umgibt. Der Ringspalt ist derart bemessen, dass der Sicherheitsbolzen bei intaktem Lastmessbolzen nicht trägt und die Messung am Messbolzen nicht beeinträchtigt.

Der technische Effekt dieses Merkmals besteht darin, dass zur Erreichung der bergbehördlichen Sicherheitsanforderungen ein schwächerer Lastmessbolzen zum Einsatz gelangen kann, der eine Sicherheit gegenüber Bruchfestigkeit unterhalb der bergbehördlich geforderten Sicherheit aufweist. Bei Versagen überträgt der vorzugsweise unterhalb des Lastmessbolzens angeordnete Sicherheitsbolzen die Last mit einer Sicherheit gegenüber Bruchfestigkeit, die den bergbehördlichen Sicherheitsanforderungen genügt. Aufgrund der geringeren Steifigkeit des Lastmessbolzens wird die Messgenauigkeit des Lastmessbolzens bei gleicher Sicherheit der Kraftübertragung zwischen Förderseil und Zwischengeschirr erhöht.

Der Übertragungsweg zum Übertragen der von dem Lastmessbolzen erfassten Messsignale zu der Übertage befindlichen Auswerteeinrichtung erfolgt vorzugsweise über in das Förderseil integrierte Signalleitungen. Alternativ können die Messsignale über eine Funkstrecke übertragen werden.

Der Lastbolzen ist in dem Zwischengeschirr zur Kraftübertragung von dem Seil auf das Zwischengeschirr derart angeordnet, dass er in erster Linie durch Querkräfte belastet wird. Um einwandfreie Messergebnisse zu erzielen, ist der Lastmessbolzen in dem Zwischengeschirr gegen eine Rotation und eine Axialverschiebung gesichert. Die Sicherung erfolgt insbesondere durch Achshalternuten, in die entsprechende, an dem Zwischengeschirr angeschraubte Achshalter eingreifen.

Die Messung der in dem Lastmessbolzen auftretenden Querkräfte erfolgt vorzugsweise über Dehnungsmessstreifen, die in entsprechenden Eindrehungen des Lastmessbolzens angebracht sind und in eine elektrische Schaltung eingebunden sind, insbesondere in eine Brückenschaltung. Da die Widerstandsänderungen der Dehnungsmessstreifen relativ klein sind, wird das Messsignal verstärkt. Der Verstärker für die Messsignale ist vorzugsweise in den Lastmessbolzen integriert. Über eine Bedien- und Anzeigeeinheit wird der von dem Lastmessbolzen kontinuierlich erfasste Signalverlauf als Kennlinie sowie zusätzlich als digitaler Wert für weitere Analysezwecke dargestellt. Über die Bedien- und Anzeigeeinheit können darüber hinaus die Grenzwerte eingegeben werden.

Die Spannungsversorgung des Lastmessbolzens, d.h. der elektrischen Schaltung und des Verstärkers, erfolgt über einen an dem Fördermittel angeordneten elektrischen Energiespeicher, der zudem die Spannungsversorgung der Schachtsignalanlage (SSA) am Fördermittel sicherstellt.

Die Auswerteeinrichtung wertet eine zeitliche Änderung des Messsignals, insbesondere mithilfe einer Überwachungssoftware aus:
Nimmt das lastabhängige Messsignal beim Abwickeln des Förderseils (Hängen) schlagartig ab, zeigt sich dies in der Signalauswertung als negativer Signalsprung. In diesem Fall erkennt die Auswerteeinheit als Störung ein Hängseil. Eine Sicherheitseinrichtung bewirkt daraufhin Schalthandlungen, insbesondere eine Abschaltung des Windenantriebes sowie eine Betätigung der auf die Seiltrommel wirkenden Bremse. Außerdem bewirkt die Sicherheitseinrichtung, dass ein Wiederanfahren des abgeschalteten Windenantriebes nach einer Hängseil-Störung ausschließlich in Aufwärtsrichtung des Fördermittels möglich ist.

Erhöht sich das lastabhängige Messsignal beim Aufwickeln des Förderseils (Treiben) schlagartig, zeigt sich dies in der Signalauswertung als positiver Signalsprung. In diesem Fall erkennt die Auswerteeinheit als Störung eine Überlast, die durch ein Hängenbleiben des Fördermittels im Schacht oder an einem Hindernis hervorgerufen wird. Eine Sicherheitseinrichtung bewirkt daraufhin Schalthandlungen, insbesondere eine Abschaltung des Windenantriebes sowie eine Betätigung der auf die Seiltrommel wirkenden Bremse. Außerdem bewirkt die Sicherheitseinrichtung, dass ein Wiederanfahren des abgeschalteten Windenantriebes nach der Überlast-Störung ausschließlich in Abwärtsrichtung des Fördermittels möglich ist.

Eine Störung soll nur bei Lastsprüngen erkannt werden, die eine bestimmte Größe übersteigen. Hierdurch wird vermieden, dass durch geringfügige Schwankungen der von dem Messbolzen erfassten Last, beispielsweise durch Schwingungen in dem Förderseil, bereits eine Störung erkannt wird. Eine Möglichkeit eine hinreichende Größe der Lastsprünge für eine sichere Störungserkennung zu gewährleisten besteht darin, dass die Störung lediglich bei einem negativen Signalsprung auf einen Wert, der kleiner ist als ein vorgegebener unterer Grenzwert und bei einem positiven Signalsprung auf einen Wert, der größer als ein oberer Grenzwert ist, erkannt wird.

Die Auswerteeinrichtung ist in einer vorteilhaften Ausgestaltung der Erfindung außerdem derart eingerichtet, dass eine Störung erkannt wird, wenn das Messsignal einen in der Auswerteinrichtung hinterlegten maximalen Grenzwert überschreitet. Übersteigt das lastabhängige Messsignal den voreingestellten Grenzwert, der mit einer maximal zulässigen Anhängelast korreliert, erkennt die Auswerteeinheit als Störung eine Überlast. Eine Sicherheitseinrichtung bewirkt daraufhin nach dem Anfahren des Windenantriebs Schalthandlungen, insbesondere eine Abschaltung des Windenantriebes sowie eine Betätigung der auf die Seiltrommel wirkenden Bremse. Außerdem bewirkt die Sicherheitseinrichtung, dass ein Wiederanfahren des abgeschalteten Windenantriebes nach der Überlast-Störung ausschließlich in Aufwärtsrichtung des Fördermittels möglich ist.

Um ein redundantes Messverfahren mit der Seilüberwachungseinrichtung sicherzustellen, wird das lastabhängige Signal direkt am Frequenzumrichter des Windenantriebs abgenommen und ausgewertet. Alternativ weist die Seilüberwachungseinrichtung mindestens einen Messwertaufnehmer zur Erfassung lastabhängiger Signale an dem Windenantrieb auf. Die Auswerteeinheit ist im Falle der redundanten Überwachung derart eingerichtet, dass bei Auftreten eines Signalsprungs, der eine bestimmte Größe überschreitet, eine Störung erkannt wird. Eine Möglichkeit eine hinreichende Größe der Lastsprünge für eine sichere Störungserkennung zu gewährleisten besteht auch hier darin, dass die Störung lediglich bei einem negativen Signalsprung auf einen Wert, der kleiner ist als ein vorgegebener unterer Grenzwert und bei einem positiven Signalsprung auf einen Wert, der größer als ein oberer Grenzwert ist, erkannt wird.

Umfasst der Windenantrieb einen Hydraulikmotor, erfolgt die Messwertaufnahme mittels eines Druckaufnehmers, der zur Erfassung des Arbeitsdruckes des Hydraulikmotors eingerichtet ist. Der Arbeitsdruck des Hydraulikmotors ist direkt proportional zu der Last an der Seiltrommel. Der Gesamtdruck P_{Gesamt} entspricht der Gesamtlast, die sich aus der Anhängelast und der während der Abwärtsbewegung des Fördermittels kontinuierlich zunehmenden bzw. der während der Aufwärtsbewegung kontinuierlich abnehmenden Seilzuglast ergibt. Kommt es nun während der Auf- oder Abwärtsbewegung des Fördermittels zu einem hinreichend großen Signalsprung der teufenabhängigen Gesamtlast, wird eine Störung erkannt.

Grundsätzlich ist eine Ausgestaltung der Seilüberwachungseinrichtung denkbar, bei der die Last von dem Fördermittel ausschließlich über den Lastmessbolzen auf das Förderseil übertragen wird. Das Förderseil weist an seinem zum Fördermittel weisenden Ende üblicherweise eine Seilkausche auf. Der Lastmessbolzen durchsetzt weitgehend spielfrei einen Durchgang in dem Zwischengeschirr und in der Seilkausche und trägt damit die gesamte Last. Eine derartige Lösung misst jedoch weniger genau.

Grundsätzlich ist darüber hinaus eine Ausgestaltung der Seilüberwachungseinrichtung denkbar, bei der zwei Dehnungsmessstreifen, einer auf jeder Seite der Seilkausche unterhalb eines lediglich eine Tragfunktion aufweisenden Tragbolzens, angeordnet sind. Durch die Installation zweier Dehnmessstreifen (DMS) - Halbbrücken auf beiden Seiten der Seilkausche wird eine Kompensation von Temperatur- und Biegeeinflüssen erreicht. Die beiden Halbbrücken werden zu einer Wheatstone Brücke verschaltet. Die Dehnmessstreifen werden sodann nach dem Befestigen vergossen und zusammen mit den Anschlusskabeln mit Blechabdeckungen gegen mechanische Beschädigungen geschützt.

Umfasst der Windenantrieb einen Elektromotor, wird die Stromaufnahme des Elektromotors kontinuierlich überwacht. Der Stromaufnahme des Elektromotors ist direkt proportional zu der Gesamtlast, die sich aus der Anhängelast und der während der Abwärtsbewegung des Fördermittels kontinuierlich zunehmenden bzw. der während der Aufwärtsbewegung kontinuierlich abnehmenden Seilzuglast ergibt. Kommt es nun während der Auf- oder Abwärtsbewegung des Fördermittels zu einem hinreichend großen Signalsprung der teufenabhärgigen Gesamtlast, wird eine Störung erkannt.

Nachfolgend wird das Verfahren zur Seilüberwachung einer Einseil-Trommelförderanlage sowie die Trommelförderanlage näher erläutert. Es zeigen:
- **Figur 1**: eine schematische Darstellung einer Einseil-Trommelförderanlage, ausgeführt als mobile Rettungswinde,
- **Figur 2 a**: eine Vorderansicht eines nicht zur Erfindung gehörigen Zwischengeschirrs der Einseil-Trommelförderanlage nach Figur 1 zur Erläuterung des Aufbaus eines Lastmessbolzens,

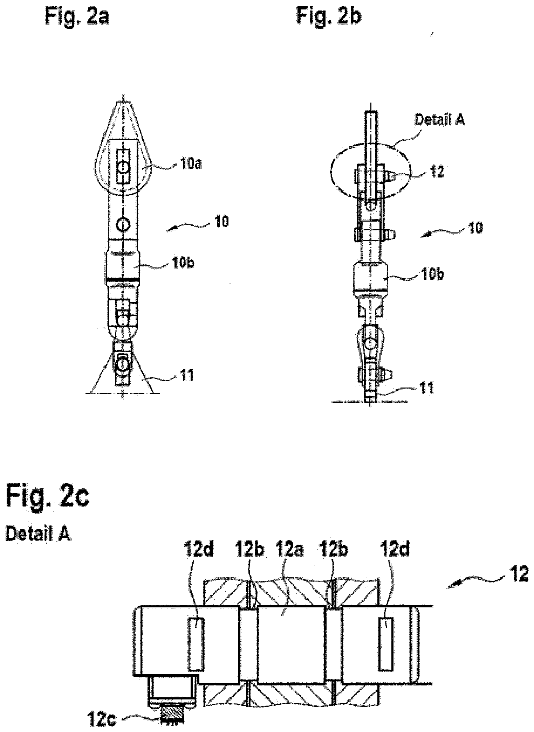

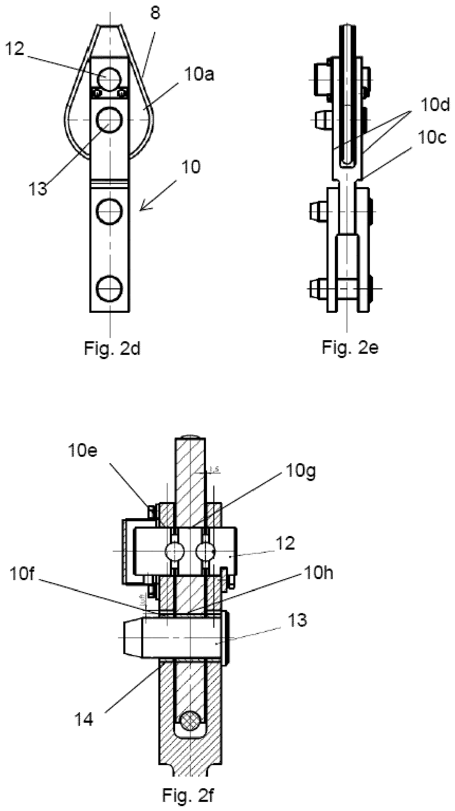

- **Figur 2 b**: eine Seitenansicht des Zwischengeschirrs nach Figur 2a,
- **Figur 2 c**: eine Darstellung eines Lastmessbolzens in dem Zwischengeschirr nach Figuren 2a, b,

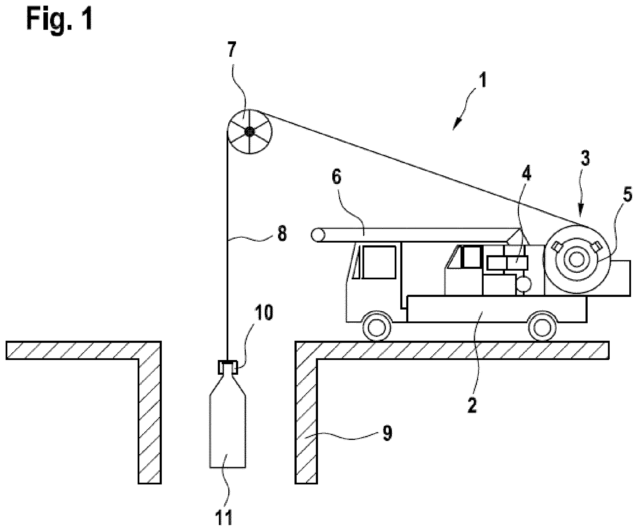

- **Figur 2 d**: eine Vorderansicht eines erfindungsgemäßen Ausführungsbeispiels eines teilweise dargestellten Zwischengeschirrs der Einseil-Trommelförderanlage nach Figur 1,
- **Figur 2 e**: eine Seitenansicht des Zwischengeschirrs nach Figur 2d,
- **Figur 2 f**: eine geschnittene Seitenansicht des Zwischengeschirrs nach Figur 2d,

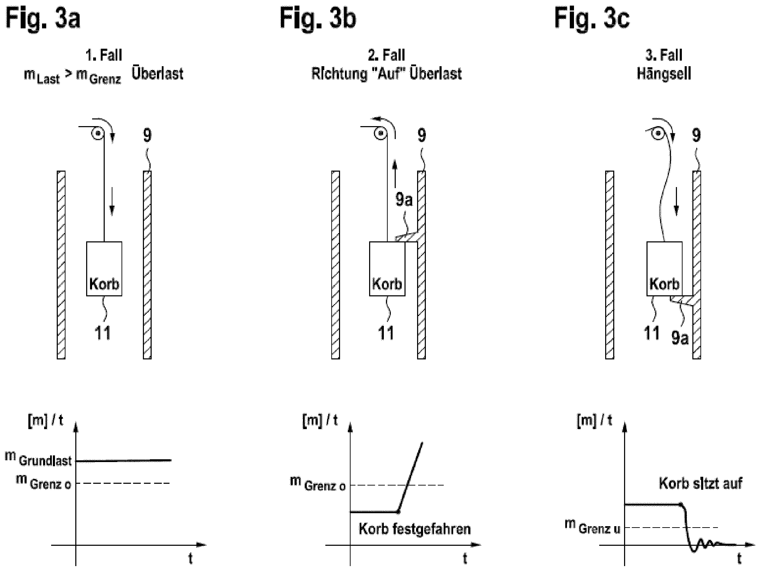

- **Figur 3 a**: eine schematische Darstellung des Störungsfalls "Überlast in der Abwärtsbewegung und Aufwärtsbewegung des Fördermittels" und der von dem Messbolzen erfasste Signalverlauf,
- **Figur 3 b**: eine schematische Darstellung des Störungsfalls "Überlast in der Aufwärtsbewegung des Fördermittels" und der von dem Messbolzen erfasste Signalverlauf,
- **Figur 3 c**: eine schematische Darstellung des Störungsfalls "Hängseil in der Abwärtsbewegung des Fördermittels" und der von dem Messbolzen erfasste Signalverlauf,

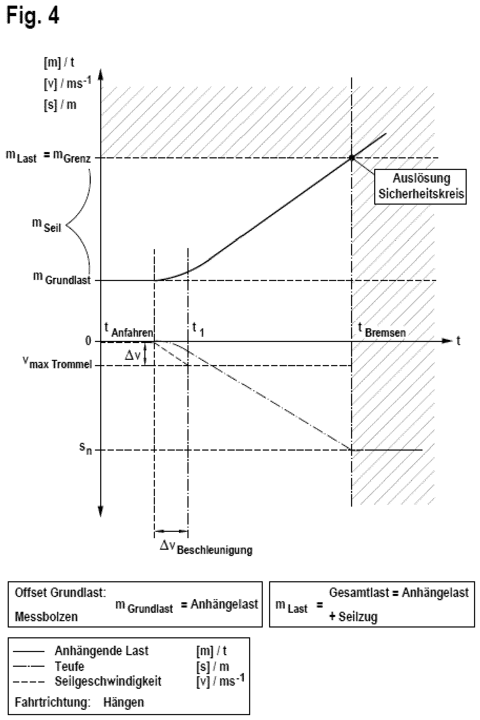

- **Figur 4**: einen Verlauf lastabhängiger Signale an dem Windenantrieb im Fall einer redundanten Überwachung im Störungsfall "Überlast in der Aufwärtsbewegung und Abwärtsbewegung des Fördermittels",

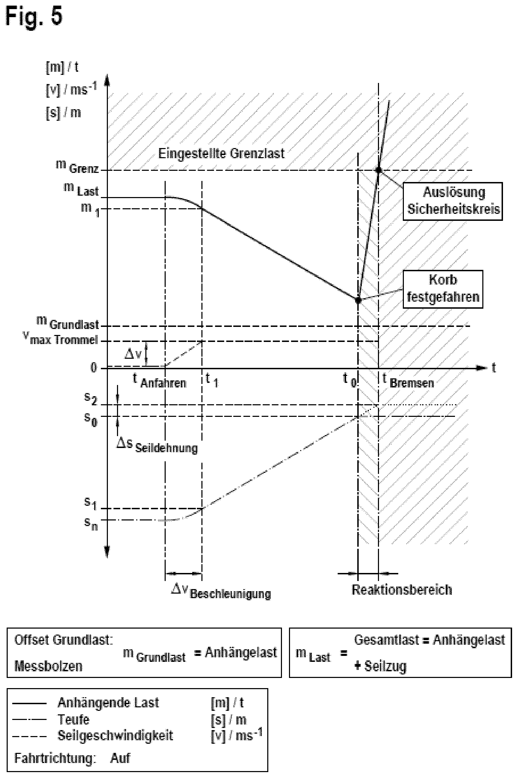

- **Figur 5**: einen Verlauf lastabhängiger Signale an dem Windenantrieb im Fall einer redundanten Überwachung im Störungsfall "Überlast in der Aufwärtsbewegung des Fördermittels" sowie

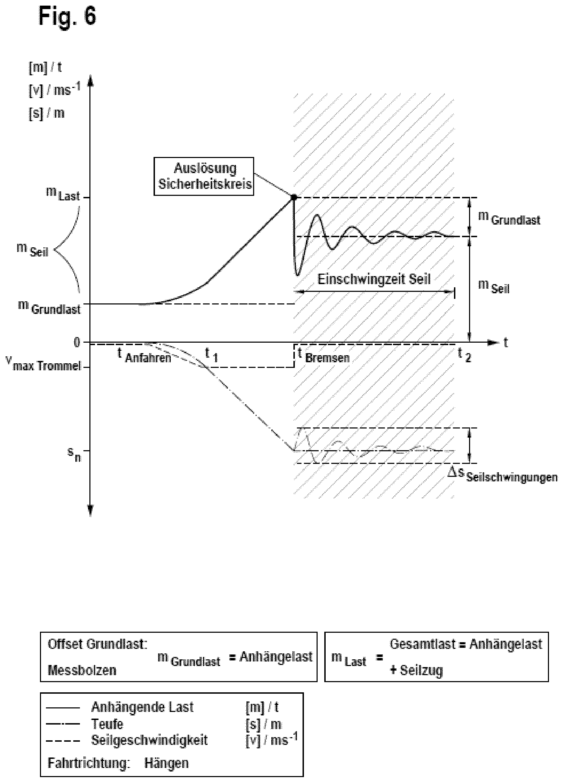

- **Figur 6**: einen Verlauf lastabhängiger Signale an dem Windenantrieb im Fall einer redundanten Überwachung im Störungsfall "Hängseil in der Abwärtsbewegung des Fördermittels".

Figur 1 zeigt eine mobile Schachtwinde (1) mit einem LKW als Trägerfahrzeug (2). Auf dem Trägerfahrzeug (2) ist eine Einseil-Trommelförderanlage (3) mit einer von einem Windenantrieb (4) angetriebenen Seiltrommel (5) angeordnet. Über einen Ausleger (6) oder eine am Fördergerüst angeordnete Seilscheibe (7) wird ein auf der Seiltrommel (5) auf- und abwickelbares Förderseil (8) in einen Schacht (9) umgelenkt. Das Förderseil (8) ist über ein schematisch in Figur 1 dargestelltes Zwischengeschirr (10) mit einem frei an dem Förderseil (8) hängenden Fördermittel (11) verbunden. Bei dem Fördermittel (11) handelt es sich insbesondere um einen Förderkorb zur Notbefahrung des Schachtes (9).

Aus der Darstellung des Zwischengeschirrs (10) in Figuren 2a, 2b ist erkennbar, dass eine Seilkausche (10a) über einen Lastmessbolzen (12) an dem Zwischengeschirr (10) angeschlagen ist. Am unteren Ende des Zwischengeschirrs (13) ist das Fördermittel (11) befestigt. Dazwischen befindet sich ein Wirbel, der eine Rotation des Fördermittels um die Seilachse erlaubt.

Der in Figur 2c dargestellte Lastmessbolzen (12) weist einen mittleren Abschnitt (12a) auf, in den über die Seilkausche (10a) Querkräfte eingeleitet werden. In den neben dem mittleren Abschnitt (12a) angeordneten Eindrehungen (12b) sind in eine elektrische Schaltung eingebundene Dehnungsmessstreifen zur Aufnahme der lastabhängigen Messsignale angeordnet, die in einem in den Lastmessbolzen (12) integrierten Verstärker verstärkt werden. Die Spannungsversorgung des Verstärkers sowie der elektrischen Schaltung und die Signalübertragung erfolgt über einen Steckkontakt (12c) an einer der Stirnseiten des Lastmessbolzens (12). Eine Axialverschiebung und Rotation des Lastmessbolzens (12) in dem Zwischengeschirr (10) wird durch zwei Achshalternuten (12d) verhindert, in die an dem Zwischengeschirr anschraubbare Achshalterbleche eingreifen.

Die Spannungsversorgung des Lastmessbolzens (12) erfolgt über einen nicht dargestellten, an dem Fördermittel (11) angeordneten Energiespeicher, der auch für die Spannungsversorgung der Schachtsignalanlage (SSA) vorgesehen ist, oder direkt über einen E-Leiter in Förderseil. Die Messsignale werden über in das Förderseil (8) integrierte elektrische Leitungen zu der zentralen Steuerung in der mobilen Schachtwinde (1) übertragen, die auch eine Auswerteeinrichtung zur Auswertung der Messsignale aufweist. Die Auswerteeinrichtung ist in der Lage, eine überlast sowie ein Hängeseil als Störung zu erkennen. Eine Sicherheitseinrichtung der zentralen Steuerung führt bei einer erkannten Störung Schalthandlungen aus, insbesondere eine Abschaltung des Windenantriebes und/oder eine Betätigung einer Bremse der Seiltrommel.

In den Figuren 2d, 2e und 2f ist eine Verbindung zwischen dem Förderseil (8) und dem Zwischengeschirr (10) dargestellt, bei der zwischen der Seilkausche (10a) und dem Zwischengeschirr (10) zusätzlich ein Sicherheitsbolzen (13) angeordnet ist. Der Messbolzen (12) stimmt hinsichtlich Aufbau und Funktionsweise mit demjenigen nach Figur 2c überein, sodass auf die dortigen Erläuterungen zur Vermeidung von Wiederholungen Bezug genommen wird.

Das Zwischengeschirr (10) weist eine gabelförmige Lasche (10c) mit zwei parallel und im Abstand zueinander angeordneten Stegen (10d) auf. Die Stege (10d) werden von einem Durchgang (10e) zur Aufnahme des Lastmessbolzens (12) sowie von einem weiteren Durchgang (10f) zur Aufnahme des Sicherheitsbolzens (13) durchsetzt. Der Durchgang (10f) zur Aufnahme des Sicherheitsbolzens (13) ist unterhalb des Durchgangs (10b) zur Aufnahme des Lastmessbolzens (12) angeordnet. In der Seilkausche (10a) befindet sich ein oberer Durchgang (10g), der mit dem Durchgang (10e) in den Stegen (10d) fluchtet. Des Weiteren befindet sich in der Seilkausche (10a) ein unterer Durchgang (10h), der mit den Durchgängen (10f) in den Stegen (10d) fluchtet. Der Durchgang (10f) in der Lasche (10c) des Zwischengeschirrs (10) umgibt den Sicherheitsbolzen (13) unter Ausbildung eines Ringspaltes (14), der derart bemessen ist, dass der Sicherheitsbolzen (13) bei intaktem Lastmessbolzen keine lasttragende Funktion aufweist. Des Weiteren ist der Ringspalt (14) derart bemessen, dass die für das Ansprechen der Dehnmessstreifen auf dem Lastmessbolzen (12) erforderliche Verformung durch den Sicherheitsbolzen nicht beeinträchtigt wird. Der Sicherheitsbolzen (13) ist zylindrisch mit glatter Oberfläche ausgeführt. Bei Versagen würde der unterhalb des Messbolzens (12) angeordnete Sicherheitsbolzen (13), beispielsweise mit einer zehnfachen Sicherheit gegenüber Bruchfestigkeit die Nennlast übertragen. Der Lastmessbolzen (12 weist indes eine deutlich, geringere Sicherheit gegenüber Bruchfestigkeit auf, beispielsweise eine vierfache Sicherheit. Sofern der Lastmessbolzen bricht, rutscht die Lasche (10c) nach unten und der Sicherheitsbolzen (13) übernimmt die tragende Funktion des Lastmessbolzens (12).

Figur 3 zeigt schematisch die verschiedenen Störungssituationen, die mit der Seilüberwachung erkannt werden:
Figur 3 a zeigt den Störungsfall "überlast in der Abwärtsbewegung bzw. der Aufwärtsbewegung des Fördermittels", d.h. beim Ab- bzw. Aufwickeln des Förderseils (8) von der Seiltrommel (5). Übersteigt das lastabhängige Messsignal den voreingestellten oberen Grenzwert m _{Grenz o}, der mit einer maximal zulässigen Anhängelast korreliert, erkennt die Auswerteeinheit als Störung eine Überlast.

Figur 3b zeigt den Störungsfall "Überlast in der Aufwärtsbewegung des Fördermittels", d.h. beim Aufwickeln des Förderseils (8) auf die Seiltrommel (5). Bleibt das Fördermittel (11) beispielsweise an einem Hindernis (9a) in dem Schacht (9) in der Aufwärtsbewegung hängen, kommt es zu einem mit dem Lastsprung korrespondierenden Signalsprung des Messsignals auf einen Wert oberhalb des voreingestellten oberen Grenzwertes m _{Grenz c}, der von der Auswerteeinrichtung als Störung erkannt wird.

Figur 3c zeigt den Störungsfall "Hängseil in der Abwärtsbewegung des Fördermittels", d.h. beim Abwickeln des Förderseils (8) von der Seiltrommel (5). Beim Aufsetzen des Fördermittels auf das Hindernis (9a) in dem Schacht (9) kommt es zu einem negativen Signalsprung, der beim Überschreiten eines voreingestellten unteren Grenzwertes m _{Grenz u} von der Auswerteeinrichtung als Störung erkannt wird.

In sämtlichen Störungsfällen erfolgt eine Abschaltung des Windenantriebes. Im Störungsfall "Überlast durch das Fördermittel" in der Abwärts - bzw. Aufwärtsbewegung ist ein Wiederanfahren des abgeschalteten Windenantriebes ausschließlich in der entgegengesetzten Richtung möglich und/oder das Fördermittel muss bis zum Erreichen der zulässigen Anhängelast entladen werden. Im Störungsfall "Überlast in der Aufwärtsbewegung des Förcermittels" (Korb festgefahren) ist ein Wiederanfahren des abgeschalteten Windenantriebes ausschließlich zum Abwickeln des Förderseils möglich. Im Störungsfall "Hängseil in der Abwärtsbewegung des Fördermittels" ist ein Wiederanfahren des abgeschalteten Windenantriebes ausschließlich zum Aufwickeln des Förderseils möglich. Durch diese Konfiguration der Sicherheitseinrichtung wird gewährleistet, dass durch ein Wiederanfahren des Windenantriebes die durch die Störung verursachte Gefahr nicht erhöht wird.

Um eine redundante Seilüberwachung der Einseil-Trommelförderanlage (3) sicherzustellen, kann die Seilüberwachungseinrichtung zusätzlich eine Erfassung lastabhängiger Signale an dem Frequenzumrichter des Windenantriebs (4) aufweisen und eine weitere Auswerteeinheit zur Auswertung der erfassten lastabhängigen Signale, die derart eingerichtet ist, dass bei Auftreten eines Signalsprunges eine Störung erkannt wird. Das im Regelbetrieb mit der Gesamtlast m_{Last} korrespondierende Signal setzt sich aus einem mit der Anhängelast m_{Grundlast} und einem mit der teufenabhängigen Seilzuglast m_{Seil} korrespondierenden Wert zusammen:

Figur 4 zeigt den Störungsfall "Überlast durch das Fördermittel", d.h. beim Auf- bzw. Abwickeln des Förderseils von der Seiltrommel. Bei Überschreiten des voreingestellten Grenzwertes m _{Grenz} wird eine Störung erkannt. Zu diesem Zeitpunkt ist die Anhängelast m_{Grundlast} zuzüglich der Seilzuglast m_{Seil}, d.h. die Gesamtlast m_{Last} höher als der Grenzwert m _{Grenz}.

Figur 5 zeigt den Störungsfall "Überlast in der Aufwärtsbewegung des Fördermittels. Es ist erkennbar, wie während der Aufwärtsbewegung die Gesamtlast m_{Last} aufgrund der abnehmenden Seilzuglast m_{Seil} kontinuierlich geringer wird. Fährt sich das Fördermittel (11) an einem Hindernis (9a) fest, kommt es zu einem positiven Signalsprung, der den voreingestellten Grenzwert m _{Grenz} überschreitet, sodass die Auswerteeinheit eine Störung erkennt.

Figur 6 zeigt den Störungsfall "Hängseil in der Abwärtsbewegung des Fördermittels. Es ist erkennbar, wie während der Abwärtsbewegung die Gesamtlast m_{Last} aufgrund der zunehmenden Seilzuglast m_{Seil} kontinuierlich größer wird. Kommt es nun zum Aufsetzen des Fördermittels auf einem Hindernis (9a), kommt es zu einem negativen Signalsprung, den die Auswerteeinheit als Hängeseil-Störung erkennt, sofern der Signalsprung einen unteren Grenzwert überschreitet. Nach einer Einschwingzeit entspricht die in diesem Störungsfall gemessene Last nur noch der zu diesem Zeitpunkt wirkenden Seilzuglast m_{Seil}. Für diesen Störungsfall wird der untere Grenzwert anhand von Referenzmessungen oder Erfahrungswerten Vorort festgelegt. Die im Regelbetrieb auftretenden, zulässigen Signalsprünge dürfen nicht zu einer fehlerhaften Störungserkennung führen. Anhand der Erfahrungswerte zu den Signalsprüngen im Regelbetrieb kann der untere Grenzwert festgelegt werden.

Über eine interne Busverbindung tauschen die Auswerteeinheiten der Messsignale von dem Lastmessbolzen (12) und der Messignale von dem Meßwertaufnehmer an dem Windenantrieb ihre Auswerteergebnisse kontinuierlich aus. Vorzugseise ist die Sicherheitseinrichtung so programmiert, dass eine Schalthandlung nur dann ausgelöst wird, wenn beide Auswerteeinrichtungen eine Störung signalisieren.

| **Nr.** | **Bezeichnung** |
|---|---|
| 1. | Mobile Schachtwinde |
| 2. | Trägerfahrzeug |
| 3. | Einseil-Trommelförderanlage |
| 4. | Windenantrieb |
| 5. | Seiltrommel |
| 6. | Ausleger |
| 7. | Seilscheibe |
| 8. | Förderseil |
| 9. | Schacht |
| 9a. | Hindernis |
| 10. | Zwischengeschirr |
| 10a. | Seilkausche |
| 10b. | Wirbel |
| 10c. | Lasche |
| 10d. | Stege |
| 10e. | Durchgang Lastmessbolzen |
| 10f. | Durchgang Sicherungsbolzen |
| 10g. | Durchgang Lastmessbolzen |
| 10h. | Durchgang Sicherungsbolzen |
| 11. | Fördermittel |
| 12. | Lastmessbolzen |
| 12a. | Mittlerer Abschnitt |
| 12b. | Eindrehung |
| 12c. | Steckkontakt |
| 13. | Sicherheitsbolzen |
| 14. | Ringspalt |

## Patentansprüche

1. Einseil-Trommelförderanlage (3) mit einer von einem Windenantrieb (4) angetriebenen Seiltrommel (5) umfassend eine Seilüberwachungseinrichtung, ein frei an einem Förderseil (8) hängendes Fördermittel (11) und ein zum Verbinden des Förderseils (8) mit dem Fördermittel (11) eingerichtetes Zwischengeschirr (10), **dadurch gekennzeichnet, dass**
- die Seilüberwachungseinrichtung einen Lastmessbolzen (12) als Bestandteil des Zwischengeschirrs (10) und einen Übertragungsweg zum Übertragen der von dem Lastmessbolzen (12) aufgenommenen Messsignale zu einer Auswerteeinrichtung aufweist,
- die Auswerteinrichtung zur Auswertung der Messignale des Lastmessbolzens (12) derart eingerichet ist, dass bei Auftreten eines Signalsprungs des Messsignals eine Störung erkannt wird,
- eine Seilkausche (10a) des Förderseils (8) über den Lastmessbolzen (12) an dem Zwischengeschirr (10) angeschlagen ist,
- zwischen der Seilkausche (10a) und dem Zwischengeschirr (10) zusätzlich ein Sicherheitsbolzen (13) angeordnet ist, der einen Durchgang (10f, 10h) in dem Zwischengeschirr (10) und in der Seilkausche (10a)durchsetzt,
- und der Durchgang (10h) in der Seilkausche und/oder der Durchgang (10f) in dem Zwischengeschirr(1C) den Sicherheitsbolzen (13) unter Ausbildung eines Ringspaltes (14) umgibt.

2. Einseil-Trommelförderanlage (3) nach Anspruch 1 , **dadurch gekennzeichnet, dass** die Auswerteinrichtung zur Auswertung der Messignale des Lastmessbolzens (12) außerdem derart eingerichtet ist, dass die Störung bei einem negativen Signalsprung auf einen Wert, der kleiner ist als ein vorgegebener unterer Grenzwert und bei einem positiven Signalsprung auf einen Wert, der größer als ein oberer Grenzwert ist, erkannt wird.

3. Einseil-Trommelförderanlage (3) nach Anspruch 1 oder 2 , **dadurch gekennzeichnet, dass** der Übertragungsweg in das Förderseil (B) integrierte Signalleitungen aufweist.

4. Einseil-Trommelförderanlage (3) nach einem der Ansprüche 1 bis 3, **dadurch gekennzeichnet, dass** der Lastmessbolzen (12) in dem Zwischengeschirr gegen eine Rotation und eine Axialverschiebung gesichert ist.

5. Einseil-Trommelförderanlage (3) nach einem der Ansprüche 1 bis 4, **dadurch gekennzeichnet, dass** an dem Lastmessbolzen (12) in eine elektrische Schaltung eingebundende Dehnungsmessstreifen zur Aufnahme der Messsignale angeordnet sind.

6. Einseil-Trommelförderanlage (3) nach einem der Ansprüche 1 bis 5, **dadurch gekennzeichnet, dass** in den Lastmessbolzen (12) ein Verstärker für die Messignale integriert ist.

7. Einseil-Trommelförderanlage (3) nach Anspruch 5 oder 6 , **dadurch gekennzeichnet, dass** die Spannungsversorgung des Lastmessbclzens (12) über einen an dem Fördermittel (11) angeordneten elektrischen Energiespeicher oder eine in das Förderseil (8) integrierte elektrische Leitung erfolgt.

8. Einseil-Trommelförderanlage (3) nach einem der Ansprüche 1 bis 7, **dadurch gekennzeichnet, dass** die Auswerteinrichtung weiter derart eingerichet ist, dass eine Störung erkannt wird, wenn das Messsignal größer als ein in der Auswerteinrichtung hinterlegter oberer Grenzwert ist.

9. Einseil-Trommelförderanlage (3) nach einem der Ansprüche 1 bis 8 **dadurch gekennzeichnet, dass** die Seilüberwachungseinrichtung eine Sicherheitseinrichtung aufweist, die derart eingerichet ist, dass eine von der Auswerteinrichtung erkannte Störung eine Abschaltung des Windenantriebs und/oder einer Betätigung einer Bremse der Seiltrommel bewirkt.

10. Einseil-Trommelförderanlage (3) nach einem der Ansprüche 2 bis 9, **dadurch gekennzeichnet, dass** die Sicherheitseinrichtung weiter derart eingerichet ist, dass bei einer erkannten Störung aufgrund eines negativen Signalsprungs beim Abwickeln des Förderseils (8) von der Seiltrommel (5), ein Wiederanfahren des abgeschalteten Windenantriebs (4) ausschließlich zum Aufwickeln des Förderseils (8) möglich ist.

11. Einseil-Trommelförderanlage (3) nach einem der Ansprüche 2 bis 10, **dadurch gekennzeichnet, dass** die Sicherheitseinrichtung weiter derart eingerichet ist, dass bei einer erkannten Störung aufgrund eines positiven Signalsprungs beim Aufwickeln des Förderseils (8) auf die Seiltrommel (5), ein Wiederanfahren des abgeschalteten Windenantriebs (4) ausschließlich zum Abwickeln des Förderseils (8) möglich ist.

12. Einseil-Trommelförderanlage (3) nach einem der Ansprüche 1 bis 11, **dadurch gekennzeichnet, dass** die Seilüberwachungseinrichtung außerdem mindestens einen Messwertaufnehmer zur Erfassung lastabhängiger Signale an dem Windenantrieb (4) aufweist und eine weitere Auswerteinrichtung zur Auswertung der Messsignale des Messwertaufnehmers derart eingerichtet ist, dass bei Auftreten eines Signalsprungs der lastabhängigen Signale eine Störung erkannt wird.

13. Einseil-Trommelförderanlage nach Anspruch 12, **dadurch gekennzeichnet, dass** der Windenantrieb (4) ein Hydraulikmotor umfasst und jeder Meßwertaufnehmer ein Druckaufnehmer ist, der zur Erfassung des Arbeitsrucks des Hydraulikmotors eingerichet ist.

14. Einseil-Trommelförderanlage nach Anspruch 12, **dadurch gekennzeichnet, dass** der Windenantrieb (4) einen Elektromotor umfasst und jeder Meßwertaufnehmer ein Strommesser ist, der zur Erfassung der Stromaufnahme des Elektromotors eingerichet ist.

15. Einseil-Trommelförderanlage nach einem der Ansprüche 1 bis 14, **dadurch gekennzeichnet, dass** der Ringspalt (14) derart bemessen ist, dass der Sicherheitsbolzen (13) bei intaktem Lastmessbolzen (12) keine lasttragende Funktion aufweist.

16. Einseil-Trommelförderanlage nach einem der Ansprüche 1 bis 15, **dadurch gekennzeichnet, dass** der Lastmessbolzen (12) mit einer geringeren Sicherheit gegenüber Bruchfestigkeit als der Sicherheitsbolzen (13) ausgelegt ist.

17. Verfahren zur Seilüberwachung einer Einseil-Trommelförderanlage (3) mit einer von einem Windenantrieb (4) angetriebenen Seiltrommel (5), einem frei an dem Förderseil (8) hängenden Fördermittel und einem zum Verbinden eins Förderseils mit dem Fördermittel eingerichteten Zwischengeschirr (10), **dadurch gekennzeichnet, dass**
- die Überwachung mit einen Lastmessbolzen (12) als Bestandteil des Zwischengeschirrs (10) durchgeführt wird, wobei eine Seilkausche (10a) des Förderseils (8) über den Lastmessbolzen (12) an dem Zwischengeschirr (10) angeschlagen ist,
- die von dem Lastmessbclzen (12) aufgenommenen Messsignale zu einer Auswerteeinrichtung zur Auswertung der Messignale übertragen werden,
- die Auswerteinrichtung eine Störung erkennt, wenn ein Signalsprung des Messsignals auftritt,
- bei Versagen des Lastmessbolzens (12) ein zusätzlich zwischen der Seilkausche (10a) und dem Zwischengeschirr (10) angeordenter Sicherheitsbolzen (13) die Last überträgt, der einen Durchgang (10f, 10h) in dem Zwischengeschirr (10) und in der Seilkausche (10a) durchsetzt, wobei der Durchgang (10h) in der Seilkausche und/oder der Durchgang (10f) in dem Zwischengeschirr(10) den Sicherheitsbolzen (13) unter Ausbildung eines Ringspaltes (14) umgibt.

18. Verfahren nach Anspruch 17, **dadurch gekennzeichnet, dass** die Störung bei einem negativen Signalsprung auf einen Wert, der kleiner ist als ein vorgegebener unterer Grenzwert und bei einem positiven Signalsprung auf einen Wert, der größer als ein oberer Grenzwert ist, erkannt wird.

19. Verfahren nach Anspruch 17 oder 18, **dadurch gekennzeichnet, dass** die Auswerteinrichtung außerdem eine Störung erkennt, wenn das Messsignal einen in der Auswerteinrichtung hinterlegten maximalen Grenzwert überschreitet.

20. Verfahren nach einem der Ansprüche 17 bis 19, **dadurch gekennzeichnet, dass** eine erkannte Störung eine Abschaltung des Windenantriebs (4) und/oder eine Betätigung einer Bremse der Seiltrommel (5) bewirkt.

21. Verfahren nach einem der Ansprüche 18 bis 20, **dadurch gekennzeichnet, dass** bei einer erkannten Störung aufgrund eines negativen Signalsprungs beim Abwickeln des Förderseils (8) von der Seiltrommel (5), ein Wiederanfahren des abgeschalteten Windenantriebs (4) ausschließlich zum Aufwickeln des Förderseils (8) ermöglicht wird.

22. Verfahren nach einem der Ansprüche 18 bis 21, **dadurch gekennzeichnet, dass** bei einer erkannten Störung aufgrund eines positiven Signalsprungs beim Aufwickeln des Förderseils (8) auf die Seiltrommel (5), ein Wiederanfahren des abgeschalteten Windenantriebs (4) ausschließlich zum Abwickeln des Förderseils (8; ermöglich wird.

23. Verfahren nach einen der Ansprüche 17 bis 22, **dadurch gekennzeichnet, dass**
- zusätzlich die Last an dem Windenantrieb (4) erfasst wird,
- die am Windenantrieb (4) erfassten Messsignale zu einer weiteren Auswerteeinrichtung zur Auswertung der Messignale übertragen werden und
- die Auswerteinrichtung eine Störung erkennt, wenn ein Signalsprung des Messsignals auftritt.

24. Verfahren nach Anspruch 23, **dadurch gekennzeichnet, dass** die Störung bei einem negativen Signalsprung auf einen Wert, der kleiner ist als ein vorgegebener unterer Grenzwert und bei einem positiven Signalsprung auf einen Wert, der größer als ein oberer Grenzwert ist, erkannt wird.

25. Verfahren nach Anspruch 23 oder 24, **dadurch gekennzeichnet, dass** eine Abschaltung des Windenantriebs und/oder eine Betätigung einer Bremse der Seiltrommel nur dann bewirkt werden, wenn eine von beiden oder beide Auswerteinrichtungen eine Störung erkannt haben.

## Claims

1. A single-cable drum-type conveying installation (3), comprising a cable drum (5) driven by a winch drive (4), comprising a cable monitoring device, a conveying means (11) suspended freely from a conveying cable (8) and an intermediate harness (10) adapted to connect the conveying cable (8) to the conveying means (11), **characterized in that**
- the cable-monitoring device has a load-measuring pin (12) as part of the intermediate harness (10) and a transmission path for transmitting measurement signals received from the load-measuring pin (12) to an evaluation device,
- the evaluation device for evaluating the measurement signals of the load-measuring pin (12) is adapted in such a manner that a malfunction is detected when a signal jump of the measurement signal occurs,
- a cable eye (10a) of the conveying cable (8) is attached to the intermediate harness (10) via the load-measuring pin (12),
- a safety pin (13) which penetrates a passage (10f, 10h) in the intermediate harness (10) and in the cable eye (10a) is additionally arranged between the cable eye (10a) and the intermediate harness (10),
- and the passage (10h) in the cable eye and/or the passage (10f) in the intermediate harness (10) surrounds the safety pin (13) to form an annular gap (14).

2. The single-cable drum-type conveying installation (3) according to claim 1, **characterized in that** the evaluation device for evaluating the measurement signals of the load-measuring pin (12) is additionally adapted in such a manner that the malfunction is detected in the event of a negative signal jump to a value which is less than a predefined lower limiting value and in the event of a positive signal jump to a value which is higher than an upper limiting value.

3. The single-cable drum-type conveying installation (3) according to claim 1 or 2, **characterized in that** the transmission path has signal lines which are integrated into the conveying cable (8).

4. The single-cable drum-type conveying installation (3) according to one of claims 1 to 3, **characterized in that** the load-measuring pin (12) is secured against any rotation and any axial displacement in the intermediate harness.

5. The single-cable drum-type conveying installation (3) according to one of claims 1 to 4, **characterized in that** strain gauges integrated into an electrical circuit are arranged on the load-measuring pin (12) to receive the measurement signals.

6. The single-cable drum-type conveying installation (3) according to one of claims 1 to 5, **characterized in that** an amplifier for the measurement signals is integrated into the load-measuring pin (12).

7. The single-cable drum-type conveying installation (3) according to claims 5 or 6, **characterized in that** the voltage supply of the load-measuring pin (12) is provided via an electrical energy accumulator arranged on the conveying means (11) or an electrical lead which is integrated into the conveying cable (8).

8. The single-cable drum-type conveying installation (3) according to one of claims 1 to 7, **characterized in that** the evaluation device is further adapted in such a manner that a malfunction is detected if the measurement signal is higher than an upper limiting value which is stored in the evaluation device.

9. The single-cable drum-type conveying installation (3) according to one of claims 1 to 8, **characterized in that** the cable-monitoring device has a safety device which is adapted in such a manner that a malfunction detected by the evaluation device brings about a switch-off of the winch drive and/or an activation of a brake of the cable drum.

10. The single-cable drum-type conveying installation (3) according to one of claims 2 to 9, **characterized in that** the safety device is further adapted in such a manner that when a malfunction is detected as a result of a negative signal jump during unwinding of the conveying cable (8) from the cable drum (5), a restarting of the switched-off winch drive (4) is possible exclusively for winding on the conveying cable (8).

11. The single-cable drum-type conveying installation (3) according to one of claims 2 to 10, **characterized in that** the safety device is further adapted in such a manner that when a malfunction is detected as a result of a positive signal jump during winding of the conveying cable (8) onto the cable drum (5), a restarting of the switched-off winch drive (4) is possible exclusively for unwinding the conveying cable (8).

12. The single-cable drum-type conveying installation (3) according to one of claims 1 to 11, **characterized in that** the cable-monitoring device additionally has at least one measurement transducer for acquiring load-dependent signals at the winch drive (4) and a further evaluation device for evaluating the measurement signal of the measurement transducer is adapted in such a manner that a malfunction is detected in the event of a signal jump of the load-dependent signals.

13. The single-cable drum-type conveying installation according to claim 12, **characterized in that** the winch drive (4) comprises a hydraulic motor, and each measurement transducer is a pressure transducer adapted to acquire the working jolt of the hydraulic motor.

14. The single-cable drum-type conveying installation according to claim 12, **characterized in that** the winch drive (4) comprises an electric motor and each measurement transducer is an ammeter adapted to measure the power consumption of the electric motor.

15. The single-cable drum-type conveying installation according to one of claims 1 to 14, **characterized in that** the annular gap (14) is dimensioned such that the safety pin (13) does not have a load-bearing function when the load-measuring pin (12) is intact.

16. The single-cable drum-type conveying installation according to one of claims 1 to 15, **characterized in that** the load-measuring pin (12) is designed with a lower safety with respect to breaking strength than the safety pin (13).

17. A method for monitoring a cable of a single-cable drum-type conveying installation (3) with a cable drum driven (5) by a winch drive (4), a conveying means which is suspended freely from the conveying cable (8) and an intermediate harness (10) adapted for connecting a conveying cable to the conveying means, **characterized in that**
- the monitoring is carried out using a load-measuring pin (12) as part of the intermediate harness (10), wherein a cable eye (10a) of the conveying cable (8) is attached to the intermediate harness (10) via the load-measuring pin (12),
- the measurement signals received by the load-measuring pin (12) are transmitted to an evaluation device for evaluating the measurement signals,
- the evaluation device detects a malfunction if a signal jump of the measurement signal occurs,
- in the event of failure of the load-measuring pin (12), a safety pin (13) additionally arranged between the cable eye (10a) and the intermediate harness (10) transfers the load which penetrates a passage (10f, 10h) in the intermediate harness (10) and in the cable eye (10a), wherein the passage (10h) in the cable eye and/or the passage (10f) in the intermediate harness (10) surrounds the safety pin (13) to form an annular gap (14).

18. The method according to claim 17, **characterized in that** the malfunction is detected in the event of a negative signal jump to a value which is less than a predefined lower limiting value and in the event of a positive signal jump to a value which is greater than an upper limiting value.

19. The method according to claim 17 or 18, **characterized in that** the evaluation device additionally detects a malfunction when the measurement signal exceeds a maximum limiting value which is stored in the evaluation device.

20. The method according to one of claims 17 to 19, **characterized in that** a detected malfunction brings about a switching-off of the winch drive (4) and/or an activation of a brake of the cable drum (5).

21. The method according to one of claims 18 to 20, **characterized in that** when a malfunction is detected as a result of a negative signal jump during unwinding of the conveying cable (8) from the cable drum (5), a restarting of the switched-off winch drive (4) is made possible exclusively for winding-on the conveying cable (8).

22. The method according to one of claims 18 to 21, **characterized in that** when a malfunction is detected as a result of a positive signal jump during winding of the conveying cable (8) onto the cable drum (5), a restarting of the switched off winch drive (4) is made possible exclusively for unwinding the conveying cable (8).

23. The method according to one of claims 17 to 22, **characterized in that**:
- the load on the winch drive (4) is additionally measured,
- the measurement signals acquired at the winch drive (4) are transmitted to a further evaluation device for evaluation of the measurement signals, and
- the evaluation device detects a malfunction if a signal jump of the measurement signal occurs.

24. The method according to claim 23, **characterized in that** the malfunction is detected in the event of a negative signal jump to a value which is less than a predefined lower limiting value and in the event of a positive signal jump to a value which is greater than an upper limiting value.

25. The method according to claim 23 or 24, **characterized in that** a switching-off of the winch drive and/or an activation of a brake of the cable drum is only brought about when one of the two or both evaluation devices have detected a malfunction.

## Revendications

1. Système monocâble de convoyage à tambour (3), pourvu d'un tambour à câble (5) entraîné par un entraînement par treuil (4), comprenant un dispositif de supervision du câble, d'un moyen de convoyage (11) accroché librement sur un câble convoyeur (8) et d'un attelage (10), aménagé pour relier le câble convoyeur (8) avec le moyen de convoyage (11), **caractérisé en ce que**
- le dispositif de supervision du câble comporte un axe dynamométrique (12), en tant que partie intégrante de l'attelage (10) et une voie de transmission, pour la transmission des signaux de mesure enregistrés par l'axe dynamométrique (12) à un dispositif d'évaluation,
- le dispositif d'évaluation est aménagé pour évaluer les signaux de mesure de l'axe dynamométrique (12) de telle sorte que lors de la production d'une dissymétrie de signal du signal de mesure, une perturbation soit identifiée,
- une cosse de câble (10a) du câble convoyeur (8) est accrochée à l'attelage (10) par l'intermédiaire de l'axe dynamométrique (12),
- additionnellement, entre la cosse de câble (10a) et l'attelage (10) est placé un boulon de sécurité (13), qui traverse un passage (10f, 10h) dans l'attelage (10) et dans la cosse de câble (10a),
- et le passage (10h) dans la cosse de câble et/ou le passage (10f) dans l'attelage (10) entoure le boulon de sécurité (13), en créant une fente annulaire (14).

2. Système monocâble de convoyage à tambour (3) selon la revendication 1, **caractérisé en ce que** le dispositif d'évaluation destiné à évaluer les signaux de mesure de l'axe dynamométrique (12) est en outre aménagé pour que dans le cas d'une dissymétrie de signal négative, la perturbation soit identifiée à une valeur qui est inférieure à une valeur limite inférieure prédéfinie et dans le cas d'une dissymétrie de signal positive, à une valeur qui est supérieure à une valeur limite supérieure.

3. Système monocâble de convoyage à tambour (3) selon la revendication 1 ou 2, **caractérisé en ce que** la voie de transmission comporte des lignes de signaux intégrées dans le câble convoyeur (8).

4. Système monocâble de convoyage à tambour (3) selon l'une quelconque des revendications 1 à 3, **caractérisé en ce que** l'axe dynamométrique (12) est bloqué en rotation et en déplacement axial dans l'attelage.

5. Système monocâble de convoyage à tambour (3) selon l'une quelconque des revendications 1 à 4, **caractérisé en ce que** sur l'axe dynamométrique (12) sont placées des jauges extensométriques intégrées dans un circuit électrique, destinées à enregistrer les signaux de mesure.

6. Système monocâble de convoyage à tambour (3) selon l'une quelconque des revendications 1 à 5, **caractérisé en ce que** dans l'axe dynamométrique (12) est intégré un amplificateur pour les signaux de mesure.

7. Système monocâble de convoyage à tambour (3) selon la revendication 5 ou 6, **caractérisé en ce que** l'alimentation en tension de l'axe dynamométrique (12) s'effectue par l'intermédiaire d'un accumulateur d'énergie électrique, intégré dans le moyen de convoyage (11) ou par un conduit électrique intégré dans le câble convoyeur (8).

8. Système monocâble de convoyage à tambour (3) selon l'une quelconque des revendications 1 à 7, **caractérisé en ce que** le dispositif d'évaluation est aménagé en outre de telle sorte qu'une perturbation soit identifiée lorsque le signal de mesure est supérieur à une valeur limite sauvegardée dans le dispositif d'évaluation.

9. Système monocâble de convoyage à tambour (3) selon l'une quelconque des revendications 1 à 8, **caractérisé en ce que** le dispositif de supervision du câble comporte un dispositif de sécurité qui est aménagé de telle sorte qu'une perturbation identifiée par le dispositif d'évaluation provoque une mise à l'arrêt de l'entraînement par treuil et/ou un actionnement d'un frein du tambour à câble.

10. Système monocâble de convoyage à tambour (3) selon l'une quelconque des revendications 2 à 9, **caractérisé en ce qu'**en outre, le dispositif de sécurité est aménagé de telle sorte que dans le cas d'une perturbation identifiée en raison d'une dissymétrie de signal négative, lors du déroulement du câble convoyeur (8) du tambour à câble (5), un redémarrage de l'entraînement par treuil (4) mis à l'arrêt ne soit possible exclusivement que pour l'enroulement du câble convoyeur (8).

11. Système monocâble de convoyage à tambour (3) selon l'une quelconque des revendications 2 à 10, **caractérisé en ce qu'**en outre, le dispositif de sécurité est conçu de telle sorte que dans le cas d'une perturbation identifiée, en raison d'une dissymétrie de signal positive, lors de l'enroulement du câble convoyeur (8) sur le tambour à câble (5), un redémarrage de l'entraînement par treuil (4) mis à l'arrêt ne soit possible exclusivement que pour le déroulement du câble convoyeur (8).

12. Système monocâble de convoyage à tambour (3) selon l'une quelconque des revendications 1 à 11, **caractérisé en ce qu'**en outre, le dispositif de supervision du câble comporte au moins un transducteur de valeurs mesurées, destiné à détecter des signaux dépendant de la charge sur l'entraînement par treuil (4) et **en ce qu'**un dispositif d'évaluation additionnel, destiné à évaluer les signaux de mesure du transducteur de valeurs mesurées est conçu de telle sorte qu'en cas de production d'une dissymétrie de signal des signaux dépendant de la charge, une perturbation soit identifiée.

13. Système monocâble de convoyage à tambour selon la revendication 12, **caractérisé en ce que** l'entraînement par treuil (4) comprend un moteur hydraulique et **en ce que** chaque transducteur de valeurs mesurées est un transducteur de pression, qui est aménagé pour détecter la pression de travail du moteur hydraulique.

14. Système monocâble de convoyage à tambour selon la revendication 12, **caractérisé en ce que** l'entraînement par treuil (4) comprend un moteur électrique et **en ce que** chaque transducteur de valeurs mesurées est un ampèremètre, qui est aménagé pour détecter la puissance absorbée par le moteur électrique.

15. Système monocâble de convoyage à tambour selon l'une quelconque des revendications 1 à 14, **caractérisé en ce que** la fente annulaire (14) est dimensionnée de telle sorte que lorsque l'axe dynamométrique (12) est intact, le boulon de sécurité (13) ne fait preuve d'aucune fonction porteuse de charge.

16. Système monocâble de convoyage à tambour selon l'une quelconque des revendications 1 à 15, **caractérisé en ce que** l'axe dynamométrique (12) est conçu avec une sécurité moindre en matière de résistance à la rupture que le boulon de sécurité (13).

17. Procédé, destiné à superviser le câble d'un système monocâble de convoyage à tambour (3) pourvu d'un tambour à câble (5) entraîné par un entraînement par treuil (4), d'un moyen de convoyage accroché librement sur le câble convoyeur (8) et d'un attelage (10), aménagé pour relier le câble convoyeur avec le moyen de convoyage, **caractérisé en ce que**
- la supervision et réalisée à l'aide d'un axe dynamométrique (12), en tant que partie intégrante de l'attelage (10), une cosse de câble (10a) du câble convoyeur (8) étant accrochée à l'attelage (10) par l'intermédiaire de l'axe dynamométrique (12),
- les signaux de mesure enregistrés par l'axe dynamométrique (12) sont transmis vers un dispositif d'évaluation, destiné à évaluer les signaux de mesure,
- le dispositif d'évaluation identifie une perturbation lorsqu'une dissymétrie de signal du signal de mesure se produit,
- en cas de défaillance de l'axe dynamométrique (12), un boulon de sécurité (13) placé additionnellement entre la cosse de câble (10a) et l'attelage (10) qui traverse un passage (10f, 10h) dans l'attelage (10) et dans la cosse de câble (10a) transmet la charge, le passage (10h) dans la cosse de câble et/ou le passage (10f) dans l'attelage (10) entourant le boulon de sécurité (13) en créant une fente annulaire (14).

18. Procédé selon la revendication 17, **caractérisé en ce que** dans le cas d'une dissymétrie de signal négative, la perturbation est identifiée à une valeur qui est inférieure à une valeur limite inférieure prédéfinie et dans le cas d'une dissymétrie de signal positive, à une valeur qui est supérieure à une valeur limite supérieure.

19. Procédé selon la revendication 17 ou 18, **caractérisé en ce que** le dispositif d'évaluation identifie en outre une perturbation lorsque le signal de mesure dépasse une valeur limite maximale sauvegardée dans le dispositif d'évaluation.

20. Procédé selon l'une quelconque des revendications 17 à 19, **caractérisé en ce qu'**une perturbation identifiée provoque une mise à l'arrêt de l'entraînement par treuil (4) et/ou un actionnement d'un frein du tambour à câble (5).

21. Procédé selon l'une quelconque des revendications 18 à 20, **caractérisé en ce que** lors d'une perturbation identifiée en raison d'une dissymétrie de signal négative, lors du déroulement du câble convoyeur (8) du tambour à câble (5), un redémarrage de l'entraînement par treuil (4) mis à l'arrêt n'est rendu possible qu'exclusivement pour l'enroulement du câble convoyeur (8).

22. Procédé selon l'une quelconque des revendications 18 à 21, **caractérisé en ce que** lors d'une perturbation identifiée en raison d'une dissymétrie de signal positive, lors de l'enroulement du câble convoyeur (8) sur le tambour à câble (5), un redémarrage de l'entraînement par treuil (4) mis à l'arrêt n'est rendu possible qu'exclusivement pour le déroulement du câble convoyeur (8).

23. Procédé selon l'une quelconque des revendications 17 à 22, **caractérisé en ce que**
- la charge sur l'entraînement par treuil (4) est détectée additionnellement,
- les signaux de mesure détectés sur l'entraînement par treuil (4) sont transmis vers un dispositif d'évaluation additionnel, pour l'évaluation des signaux de mesure et
- le dispositif d'évaluation identifie une perturbation lorsqu'une dissymétrie de signal du signal de mesure se produit.

24. Procédé selon la revendication 23, **caractérisé en ce que** dans le cas d'une dissymétrie de signal négative, la perturbation est identifiée à une valeur qui est inférieure à une valeur limite inférieure prédéfinie et dans le cas d'une dissymétrie de signal positive, à une valeur qui est supérieure à une valeur limite supérieure.

25. Procédé selon la revendication 23 ou 24, **caractérisé en ce qu'**une mise à l'arrêt de l'entraînement par treuil et/ou un actionnement d'un frein du tambour à câble n'est provoqué que lorsque l'un des deux ou les deux dispositifs d'évaluation ont identifié une perturbation.
